# FASCICULE DE BREVET EUROPEEN

(11) **EP 1 689 558 B1**
(45) Date de publication et mention de la délivrance du brevet: **06.08.2008**
(21) Numéro de dépôt: 04805273.2
(22) Date de dépôt: 22.10.2004
(51) Int. Cl.: B23Q 1/01, B23Q 1/62, B23Q 1/48, B21J 15/10

(54) **PROCEDE ET DISPOITIF D'USINAGE DE PANNEAUX**
VERFAHREN UND VORRICHTUNG ZUR BEARBEITUNG VON PLATTEN
METHOD AND DEVICE FOR MACHINING PANELS

(30) Priorité: 24.10.2003 FR 0312484; 02.12.2003 FR 0314109
(43) Date de publication de la demande: 16.08.2006
(73) Titulaire: DUFIEUX INDUSTRIE, 38130 Echirolles (FR); AIRBUS France, 31060 Toulouse Cédex (FR)
(72) Inventeur: PANCZUK, René, F-38500 Coublevie (FR); FOISSAC, Pierre-Yves, F-38560 Jarrie (FR)
(74) Mandataire: Le Cacheux, Samuel L.R.
(86) Numéro de dépôt international: PCT/FR2004/002709
(87) Numéro de publication internationale: WO 2005/046931

(56) Documents cités:
- EP-A- 0 338 117
- US-A- 4 955 119
- US-A- 4 967 947
- US-A- 5 584 621

## Description

L'invention concerne le domaine technique des dispositifs et procédés utilisés pour l'usinage de flans pré-conformés ou de panneaux, tels que, par exemple, les panneaux utilisés pour réaliser les carlingues ou fuselages d'avions (voir, par exemple, EP-0 338117-A).

Dans le domaine ci-dessus, il est connu de réaliser un usinage, par électroérosion des panneaux pré-conformés selon des formes non développables, Un tel usinage fait intervenir un masquage des zones ne devant pas être usinées, puis un trempage dans des bains de solutions électrolytiques. Ainsi, ce procédé permet, effectivement, un usinage localisé de panneaux de formes générales non développables, mais présente, néanmoins, deux inconvénients majeurs.

Tout d'abord, l'usinage par électroérosion constitue une source importante de rejets à traiter, dans la mesure où il convient, tout d'abord, d'assurer, après usinage, un nettoyage des panneaux avec retrait des éléments de masquage et rinçage, puis un recyclage des solutions de nettoyage, ainsi que des différents bains électrolytiques utilisés.

Un autre inconvénient de l'usinage par électroérosion réside dans l'impossibilité, avec ce procédé, de réaliser, en une seule opération, un usinage présentant des zones de profondeurs différentes.

Compte tenu des inconvénients ci-dessus et, notamment, des coûts de traitement des rejets polluants des installations d'usinage par électroérosion, il a été proposé de mettre en oeuvre un usinage par enlèvement de matière des panneaux de formes concaves ou convexes ou, encore, complexes.

A cet effet, le brevet US 5 163 793 a proposé de mettre en oeuvre une installation d'usinage comprenant une sorte de matelas de vérins hydrauliques, équipés au niveau de leur extrémité supérieure, d'une ventouse de préhension montée sur une rotule. Le dispositif comprend, en outre, au-dessus du matelas de vérins un portique, mobile en translation horizontale, portant une tête d'usinage.

Dans la mesure où chaque vérin est réglable en hauteur individuellement, il est ainsi possible d'assurer le maintien de panneaux présentant des formes gauches ou complexes.

Cependant, il est apparu que, si un tel dispositif permettait effectivement d'assurer des usinages par enlèvement de matières de panneaux présentant des formes gauches ou complexes non développables, il n'était pas en mesure de permettre d'assurer une grande précision d'usinage, en raison notamment de son incapacité à assurer un maintien suffisamment rigide du panneau à usiner.

Ainsi, il est apparu le besoin d'un nouveau procédé d'usinage et d'un dispositif de mise en oeuvre de ce procédé d'usinage permettant d'assurer divers usinages et, notamment, des usinages par enlèvement de matière, tout en présentant une plus grande précision de travail que les procédés et dispositifs selon l'art antérieur et en permettant une réduction notable des polluants.

Afin d'atteindre ces objectifs, l'invention concerne un procédé d'usinage d'un panneau selon la revendication 1.

De manière avantageuse, le déplacement coordonné, de l'outil d'usinage en fonctionnement et de l'élément de maintien, permet de réaliser, avec une grande précision, un usinage continu du panneau, sur une surface étendue supérieure à la surface de travail de l'outil.

Selon l'invention, l'élément de maintien peut agir de différentes façons sur la zone d'appui au niveau de la face de maintien du panneau. Ainsi, selon l'invention, l'élément de maintien peut diriger un flux de fluide sous pression, tel que par exemple de l'eau ou, encore, de l'air comprimé, vers la zone d'appui, afin d'équilibrer l'effort de l'outil d'usinage au niveau de la zone de travail. La mise en oeuvre d'un tel fluide sous pression permet, en outre, d'assurer un refroidissement du panneau usiné.

Selon une caractéristique de l'invention, le ou les déplacements coordonnés de l'outil et de l'élément de maintien sont assurés de façon automatique dans le cadre d'un processus automatisé.

Selon une forme préférée mais non exclusive de mise en oeuvre du procédé d'usinage selon l'invention, l'élément de maintien est placé au contact du panneau pendant le déplacement coordonné du guidage. De manière préférée, l'élément de maintien exerce alors, sur le panneau, une force d'appui de direction perpendiculaire à la surface de la zone d'appui. De plus, l'élément de maintien aura, de préférence, une action ponctuelle ou quasi ponctuelle sur la face de maintien. Ce caractère ponctuel, notamment mais non exclusivement dans le cas d'un appui direct, offre alors une très grande liberté de travail sur des surfaces complexes.

Selon une autre caractéristique de l'invention et afin d'éviter un effet d'avalement du panneau par l'outil d'usinage, il peut être prévu de mettre en oeuvre une application d'au moins un élément de contre appui au niveau de la zone de travail.

Selon l'invention, l'outil d'usinage peut être adapté pour réaliser différents types d'usinage. Ainsi, l'outil d'usinage peut, par exemple, être adapté pour assurer un usinage par projection de matière ou de particules, permettant d'assurer une modification de l'état superficiel du panneau à usiner ou, encore, une modification des contraintes de ce dernier, telles que, par exemple, au moyen de la technique appelée «peen-forming» ou, encore, « formage » par projection de particules ou billes.

Dans une forme préférée de mise en oeuvre du procédé d'usinage selon l'invention, l'outil d'usinage est adapté pour réaliser un usinage par arrachement ou enlèvement de matière et se trouve animé d'un mouvement de rotation sur lui-même, d'axe Δ. Un tel outil d'usinage peut, par exemple, être adapté pour réaliser ce qu'il est convenu d'appeler un usinage grande vitesse, encore appelé « UGV ».

Selon une caractéristique de l'invention, l'élément de maintien exerce, sur la zone d'appui, une force de direction Δ' et, en cours d'usinage, pendant le déplacement coordonné de l'outil d'usinage et de l'élément d'appui, les axes Δ et Δ' sont sensiblement confondus.

Selon encore une autre caractéristique de l'invention, il est prévu de mettre en oeuvre un amortissement des vibrations d'usinage au moins au niveau de l'élément de maintien.

Conformément à l'invention, le déplacement relatif de l'outil d'usinage en fonctionnement et de l'élément de maintien peut être réalisé de différentes façons, telles que, par exemple, en mettant en oeuvre la combinaison d'un déplacement du panneau associé à des déplacements de l'outil d'usinage et de l'élément de maintien.

Selon une forme préférée de réalisation, l'élément de maintien et l'outil d'usinage sont chacun déplacés selon au moins cinq degrés de liberté. Il est alors possible, dans une telle configuration, d'assigner une position fixe au panneau pendant toute la durée de son usinage.

Selon une caractéristique, préférée mais non strictement nécessaire de l'invention, l'outil d'usinage et l'élément de maintien sont chacun déplacés selon trois degrés de liberté de déplacement en translation d'axes, respectivement **X, Y, Z** et **X', Y', Z'** et deux degrés de déplacement en rotation d'axe **R₁, R₂,** respectivement **R'₁, R'₂,** où **R₁, R'₁** sont parallèles, respectivement, aux axes **Y, Y'** et **R₂, R'₂** sont parallèles aux plans **X, Z,** respectivement **X', Z',**

Selon encore une autre caractéristique de l'invention, le panneau à usiner est placé selon une orientation sensiblement verticale. Cette disposition de l'invention permet alors d'assurer une évacuation par gravité des particules arrachées ou enlevées au panneau au cours de son usinage ou, encore, d'assurer une récupération aisée des particules éventuellement projetées sur ce même panneau lors de son usinage.

Selon encore une autre caractéristique de l'invention, le procédé met en oeuvre une détermination de la géométrie réelle de la face de maintien avant usinage, ainsi qu'un usinage du panneau à une épaisseur d'usinage prédéterminée en plaçant, pendant le déplacement coordonné d'usinage, l'élément de maintien et l'outil d'usinage à une distance correspondant à l'épaisseur prédéterminée.

Selon l'invention, il peut être envisagé d'assurer un maintien de différentes façons du panneau. Ainsi, il peut être envisagé que l'élément de maintien assure également un usinage du panneau et comprenne, à cet effet, également un outil d'usinage.

Toutefois, dans une forme préférée de mise en oeuvre du procédé d'usinage selon l'invention, l'élément de maintien assure un maintien de la face de maintien du panneau sans usinage de cette face de maintien.

L'invention concerne, également, un dispositif permettant de mettre en oeuvre le procédé d'usinage selon l'invention tel que défini à la revendication 14.

Selon une caractéristique de l'invention, les moyens de déplacement de l'outil et de l'élément de maintien présentent chacun au moins cinq axes de déplacement, de manière à conférer à l'outil et à l'élément de maintien au moins cinq degrés de liberté.

Au sens de l'invention, une telle capacité de déplacement de l'outil et de l'élément de maintien, par rapport au panneau à usiner, peut être assurée de différentes manières, telles que, par exemple, au moyen de deux bras robotisés à six degrés de liberté, trois degrés de liberté en rotation et trois degrés de liberté en translation, l'un des bras portant, au niveau de son extrémité, l'outil d'usinage, tandis que l'autre bras porte l'élément de maintien.

Il pourrait également être envisagé d'assurer le déplacement de l'outil et de l'élément de maintien au moyen de structures robotisées, dites parallèles.

Selon une forme préférée de réalisation, permettant une plus grande simplicité d'automatisation et de commande, les moyens de déplacement de l'outil et de l'élément de maintien comprennent chacun trois degrés de déplacement en translation d'axes **X, Y, Z,** respectivement **X', Y', Z'** et deux degrés de déplacement en rotation d'axes respectifs **R₁, R₂** et **R'₁, R'₂,** où **R₁** et **R'₁** sont parallèles aux axes **Y, Y'** respectivement, et **R₂, R'₂** sont parallèles aux plans définis par les axes **X, Z** et **X', Z'.**

Dans une forme préférée de réalisation du dispositif d'usinage selon l'invention les moyens de déplacement de l'outil comprennent alors :
- une poutre mobile en translation le long d'au moins une voie de guidage d'axe **X** supportée par un châssis et associée à des moyens moteurs pilotés par l'unité de commande,
- un chariot mobile en translation le long d'une voie de guidage d'axe **Z,** portée par la poutre et associée à des moyens moteurs pilotés par l'unité de commande, l'axe **Z** étant sensiblement perpendiculaire à l'axe **X,**
- un bras télescopique en translation, d'axe **Y** porté par le chariot et associé à des moyens moteurs pilotés par l'unité de commande, l'axe **Y** étant sensiblement perpendiculaire au plan défini par les axes **X, Z,**
- un support de tête adapté à une extrémité du bras télescopique et mobile en rotation par rapport au bras d'axe **R₁** parallèle à l'axe **Y** et associé à des moyens moteurs pilotés par l'unité de commande,
- une tête porte outil, adaptée sur le support de tête, mobile en rotation par rapport au support d'axe R₂ perpendiculaire à l'axe **Y** et associée à des moyens moteurs pilotés par l'unité de commande.

Les moyens de déplacement de l'élément de maintien comprennent, pour leur part :
- une poutre mobile en translation le long d'au moins une voie de guidage d'axe **X'** supportée par un châssis et associée à des moyens moteurs pilotés par l'unité de commande,
- un chariot mobile en translation le long d'une voie de guidage d'axe **Z',** portée par la poutre et associée à des moyens moteurs pilotés par l'unité de commande, l'axe **Z'** étant sensiblement perpendiculaire à l'axe **X',**
- un bras télescopique en translation, d'axe **Y'** porté par le chariot et associé à des moyens moteurs pilotés par l'unité de commande, l'axe **Y'** étant sensiblement perpendiculaire au plan défini par les axes **X', Z',**
- un support de tête adapté à une extrémité du bras télescopique et mobile en rotation par rapport au bras d'axe **R'₁** parallèle à l'axe **Y'** et associé à des moyens moteurs pilotés par l'unité de commande,
- une tête porte élément de maintien, adaptée sur le support de tête, mobile en rotation par rapport au support d'axe **R'₂** perpendiculaire à l'axe Y' et associée à des moyens moteurs pilotés par l'unité de commande.

Les moyens de support sont alors adaptés sur le châssis, de manière à être interposés, entre les moyens de déplacement de l'outil et les moyens de déplacement de l'élément de maintien.

Selon une autre caractéristique de l'invention, et afin d'apporter une solution aux éventuels problèmes d'asservissement :
■ le support de la tête porte outil est, d'une part, adapté sur un berceau équipant l'extrémité du bras télescopique et étant mobile en rotation autour de l'axe **R₁** et, d'autre part, mobile par rapport au berceau en rotation autour d'un axe **R₃** perpendiculaire à l'axe **R₁,**
■ le support de la tête porte outil est, d'une part, adapté sur un berceau équipant l'extrémité du bras télescopique et étant mobile en rotation autour de l'axe **R'₁** et, d'autre part, mobile par rapport au berceau en rotation autour d'un axe **R'₃** perpendiculaire à l'axe **R'₁.**

De manière préférée, les axes **X, Z** et **X', Z'** définissent des plans verticaux sensiblement parallèles, de sorte que le panneau possède une orientation sensiblement verticale au cours de son usinage.

Selon l'invention, la tête porte outil peut être adaptée afin de recevoir différents types d'outils, tels que, par exemple, des outils de projection de particules ou, encore, des outils d'enlèvement ou d'arrachement de matières. Ainsi, dans une forme préférée, la tête porte outil comprend des moyens d'entraînement en rotation de l'outil autour d'un axe **Δ** sensiblement perpendiculaire à l'axe **R₂.**

Selon une autre caractéristique de l'invention, afin d'éviter un phénomène d'attraction, dit encore d'avalement, du panneau par l'outil d'usinage, les moyens de déplacement comprennent au moins un élément de contre appui sur la face de travail du panneau.

Selon encore une autre caractéristique de l'invention, afin d'assurer une grande précision d'usinage, le dispositif comprend, en outre, des moyens d'amortissement des vibrations d'usinage.

De manière préférée, afin d'assurer une absorption au plus proche de leurs points de production des vibrations d'usinage, les moyens d'amortissement sont adaptés sur les moyens de déplacement de l'élément de maintien. De tels moyens d'amortissement peuvent alors, par exemple, être constitués par systèmes d'amortisseurs hydrauliques ou hydropneumatiques, supportant, par exemple, la tête des moyens de déplacement de l'élément de maintien.

Selon l'invention, l'élément de maintien peut être réalisé de différentes façons. Ainsi, l'élément de maintien peut, par exemple, être constitué par une buse de projection d'un fluide sous pression ou, encore, sous la forme d'un patin, en matériau présentant un faible coefficient de friction, destiné à venir en appui sur la face de maintien du panneau et à glisser sur cette dernière lors du déplacement coordonné. De manière préférée, l'élément de maintien agira de façon ponctuelle ou quasi ponctuelle sur la face de maintien, cette action étant alors, de préférence, sensiblement perpendiculaire à la face de maintien en son point d'application.

Selon une caractéristique préférée de réalisation, l'élément de maintien comprend au moins une sphère d'appui destinée à rouler sur la face de maintien du panneau pendant l'usinage. Dans une forme particulièrement avantageuse de réalisation, la sphère d'appui est constituée en matériau élastiquement déformable, de manière à amortir les vibrations d'usinage.

Selon l'invention, les moyens de support du panneau peuvent être réalisés de toute façon appropriée.

Dans une forme préférée de réalisation, les moyens de support du panneau sont amovibles, de manière à permettre, par exemple, un fonctionnement en temps masqué du dispositif d'usinage. En effet, pendant la mise en place d'un panneau sur les moyens de support, le dispositif peut, par exemple, usiner un autre panneau supporté par d'autres moyens de support et ainsi de façon alternée.

Selon une forme préférée de réalisation, les moyens de support comprennent un cadre amovible, équipé de moyens de fixation d'un panneau à usiner.

Ainsi, il est possible de prévoir un certain nombre de cadres amovibles permettant une utilisation optimale du dispositif. De la même manière, il est possible de prévoir différents types de cadres en fonction des différentes formes de panneaux susceptibles d'être usinés sur le dispositif selon l'invention.

Dans une forme préférée de réalisation, le cadre amovible comprend au moins une traverse mobile permettant un ajustement des dimensions du cadre aux dimensions du panneau à usiner.

Diverses autres caractéristiques de l'invention ressortent de la description ci-dessous effectuée en référence aux dessins qui illustrent des formes préférées, mais non limitatives, de réalisation d'un dispositif d'usinage pour la mise en oeuvre du procédé conforme à l'invention.
La **fig. 1** est une perspective générale schématique d'une forme préférée de réalisation d'un dispositif d'usinage selon l'invention.
La **fig. 2** est une coupe schématique selon le plan **II-II** de la **fig. 1****.**
La **fig. 3** est une élévation montrant une configuration préférée de placement d'un outil d'usinage et d'un élément de maintien pendant l'usinage d'un panneau conformément au procédé selon l'invention.
La **fig. 4** est une perspective, à plus grande échelle, d'une forme préférée mais non exclusive, de réalisation de moyens de support d'un panneau à usiner selon l'invention.
La **fig. 5** est une vue, analogue à la fig. 3, montrant une variante de réalisation du dispositif d'usinage selon l'invention.
La **fig. 6** est une élévation, en vue de côté, d'une autre forme de réalisation du dispositif d'usinage selon l'invention.
La **fig. 7** est une vue, analogue à la **fig. 5****,** montrant une autre variante de réalisation du dispositif d'usinage.

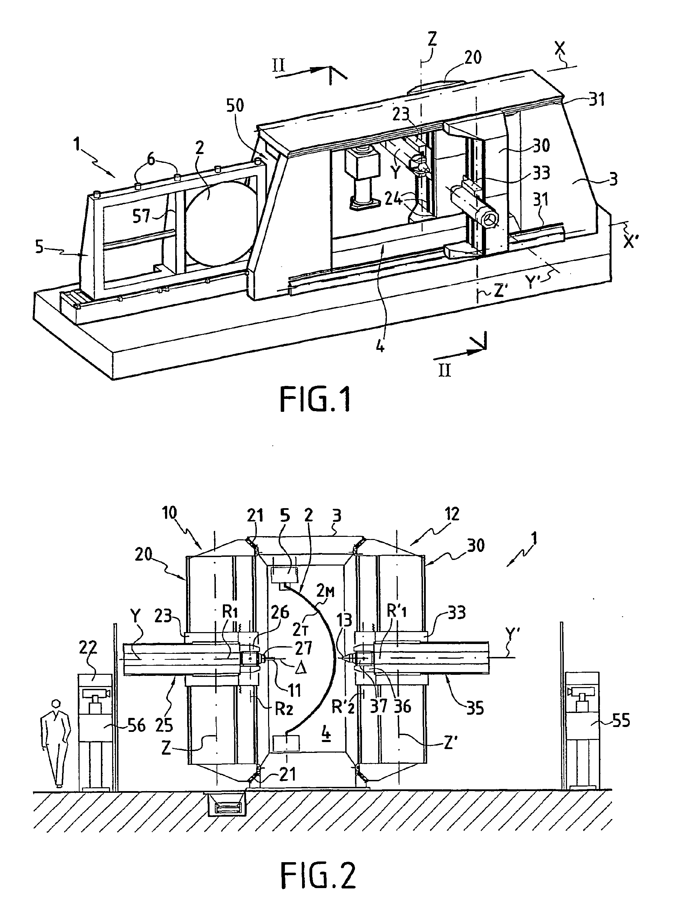

Un dispositif d'usinage selon l'invention, tel qu'illustré à la **fig. 1** et désigné dans son ensemble par la référence 1, permet l'usinage d'un panneau **2** susceptible de présenter une forme générale complexe, non développable, telle que, par exemple, convexe ou concave ou, encore, localement convexe et localement concave.

Afin de permettre cet usinage, le dispositif **1** comprend un châssis **3** qui, selon l'exemple illustré, est réalisé sous la forme d'une sorte de portique sensiblement vertical, définissant une fenêtre **4** à l'intérieur de laquelle le panneau à usiner vient se placer, en étant maintenu par des moyens de support **5.** Selon l'exemple illustré, les moyens de support **5** sont réalisés sous la forme d'un cadre amovible susceptible d'être immobilisé, au niveau de la fenêtre **4,** sur le châssis **3** par l'intermédiaire de moyens de verrouillage **6** pouvant être réalisés de toute façon appropriée.

Conformément à une caractéristique essentielle de l'invention, le dispositif d'usinage **1** comprend, en outre, des moyens de déplacement **10** d'au moins un outil et, selon l'exemple illustré, exactement un outil d'usinage **11,** ainsi que des moyens de déplacement **12** d'au moins un et, selon l'exemple illustré, exactement un élément de maintien **13.** Les moyens de déplacement **10** et **11** sont, comme le montre plus particulièrement la **fig. 2****,** adaptés de part et d'autre du châssis **3,** de manière que le panneau **2** se trouve interposé entre l'outil d'usinage **11** et l'élément de maintien **13.**

Selon l'exemple illustré, les moyens de déplacement **10** de l'outil comprennent une poutre **20,** mobile en translation le long d'au moins une et, selon l'exemple, deux voies de guidage **21** d'axe **X** supportées par le châssis **3.** L'axe **X** des voies de guidage **21** présente alors une orientation sensiblement horizontale.

De manière connue en soi de l'homme du métier, spécialiste dans la conception et la fabrication de machines-outils, la poutre **20** se trouve associée à des moyens moteurs, non représentés, et pilotés par une unité de commande **22,** dont les différentes fonctionnalités seront précisées par la suite, étant entendu que l'unité de commande **22** est adaptée pour permettre un fonctionnement automatisé du dispositif d'usinage **1.**

Les moyens de déplacement **10** de l'outil **11** comprennent, en outre, un chariot **23,** mobile en translation le long d'une voie de guidage **24** d'axe **Z,** portée par la poutre **20.** Selon l'exemple illustré, l'axe **Z** présente une orientation sensiblement verticale et se trouve perpendiculaire à l'axe **X,** de sorte que les axes **X** et **Z** définissent un plan également vertical. Le chariot **23** se trouve également associé à des moyens moteurs, non représentés, assurant son déplacement le long de la voie **24** et étant pilotés par l'unité de commande **22.**

Les moyens de déplacement **10** comprennent, aussi, un bras **25,** télescopique en translation d'axe **Y** qui est porté par le chariot **23.** Selon l'exemple illustré, l'axe de translation **Y** est sensiblement perpendiculaire au plan défini par les axes **X** et **Z** de translations croisées du chariot **23.** Le bras télescopique est, en outre, associé à des moyens moteurs, non représentés, pilotés par l'unité de commande **22.**

Selon l'exemple illustré, le bras télescopique **25** est équipé, au niveau de son extrémité orientée vers le châssis **3,** d'un support de tête **26,** mobile en rotation par rapport au bras **25** selon un axe de rotation **R₁** parallèle à l'axe **Y** et, selon l'exemple, confondu avec cet axe Y. Comme les autres organes mobiles **20, 23, 25** constitutifs des moyens de déplacement **10,** le support de tête **26** est associé à des moyens moteurs non représentés et pilotés par l'unité de commande 22.

Enfin, les moyens de déplacement **10** comprennent une tête porte-outil **27,** adaptée sur le support de tête **26,** de manière à être mobile en rotation par rapport au support **26** selon un axe de rotation **R₂,** sensiblement perpendiculaire à l'axe **R₁**.Bien entendu, le mouvement de rotation de la tête **27** autour de l'axe **R₂** se trouve associé à des moyens moteurs, non représentés, pilotés par l'unité de commande **22.**

La configuration, telle que décrite précédemment, confère donc à l'outil **11,** solidaire de la tête porte outil **27,** cinq degrés de liberté, à savoir trois degrés de liberté en translation d'axes **X, Y, Z** et deux degrés de liberté en rotation d'axes **R₁** et **R₂.**

Enfin, selon l'exemple illustré, la tête porte outils **27** est équipée de moyens moteurs, non représentés, permettant d'entraîner l'outil **11** en rotation d'usinage selon un axe Δ qui, selon l'exemple illustré à la **fig. 2****,** est sensiblement confondu avec l'axe **Y,** dans la mesure où cette figure correspond à une position de repos ou d'attente. Bien entendu, compte tenu des différents degrés de liberté de la tête **27,** l'axe Δ peut présenter différentes orientations en restant sensiblement perpendiculaire à l'axe R₂. Les moyens moteurs d'entraînement en rotation de l'outil **11,** équipant la tête **27** sont également pilotés par l'unité de commande **22.**

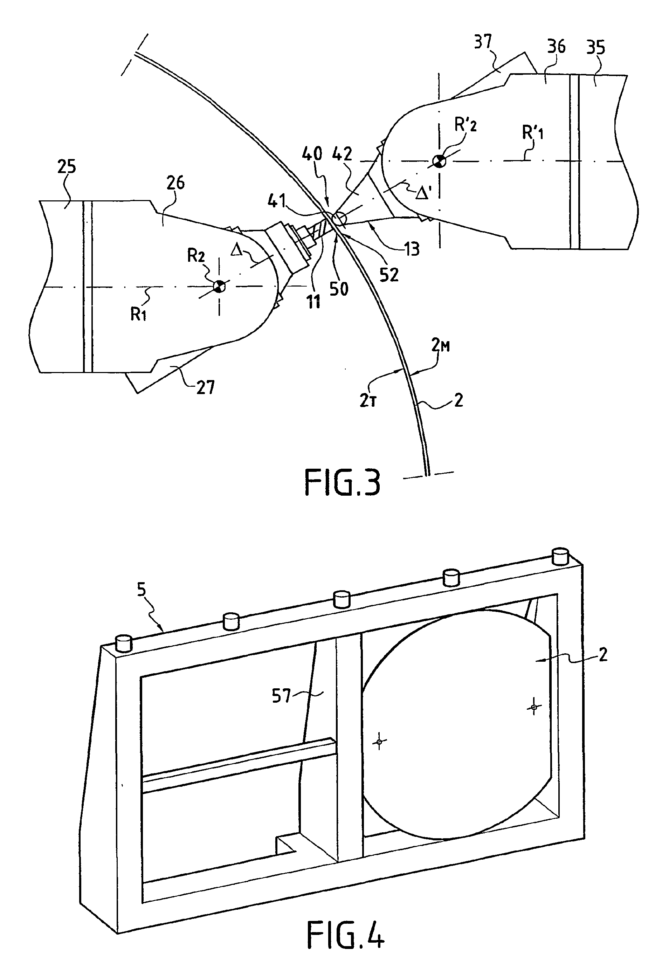

Selon l'invention, l'outil d'usinage **11** peut être réalisé de différentes façons et, selon l'exemple illustré, comme cela ressort plus particulièrement de la fig. 3, l'outil **11** est réalisé sous la forme d'une fraise, entraînée en rotation d'axe Δ, par les moyens moteurs, équipant la tête porte outil **27.**

Les moyens de déplacement **12** de l'élément de maintien **13** présentent une structure sensiblement analogue à celle des moyens de déplacement **10** de l'outil **11.** Ainsi les moyens de déplacement **12** de l'outil de maintien **13** comprennent :
- une poutre **30,** qui est mobile en translation le long d'au moins une et, selon l'exemple, de deux voies de guidage **31** d'axe **X** supportées par le châssis **3** et qui est associée à des moyens moteurs pilotés, non représentés, par l'unité de commande, l'axe **X'** étant horizontal,
- un chariot **33** qui est mobile en translation le long d'une voie de guidage **34** d'axe **Z'** portée par la poutre **30** et qui est associé à des moyens moteurs, non représentés, pilotés par l'unité de commande 2, l'axe **Z'** étant sensiblement perpendiculaire à l'axe **X',**
- un bras **35** télescopique en translation, d'axe **Y'** porté par le chariot **33** et associé à des moyens moteurs, non représentés, pilotés par l'unité de commande **22,** l'axe **Y'** étant sensiblement perpendiculaire au plan défini par les axes **X', Z',**
- un support de tête **36** adapté à une extrémité du bras télescopique **35,** mobile en rotation par rapport au bras **35** selon un axe **R₁** parallèle à l'axe **Y** et associé à des moyens moteurs, non représentés, pilotés par l'unité de commande **(22),**
- et une tête porte élément de maintien **37,** adaptée sur le support de tête **36,** mobile en rotation par rapport au support **36** selon un axe **R₂** perpendiculaire à l'axe **R'₁** et associé à des moyens moteurs, non représentés, pilotés par l'unité de commande **(22).**

Conformément à l'invention, l'élément de maintien **13** peut être réalisé de toute façon appropriée et, selon l'exemple illustré, l'élément de maintien **13** présente, au niveau d'une extrémité **40** opposée à la tête de support **37,** une sphère **41** destinée à définir un appui sensiblement ponctuel sur le panneau **2,** comme cela apparaîtra par la suite. De manière préférée, la sphère **41** est réalisée dans un matériau élastiquement déformable, tel que, par exemple, une matière synthétique polymère ou une matière plastique. La capacité de déformation élastique de la sphère est alors mise à profit pour amortir les vibrations d'usinage. Bien entendu, la sphère pourrait également être réalisée en d'autres matériaux, tels que, par exemple, un métal comme de l'acier ou d'autres alliages métalliques adaptés. Selon l'exemple illustré, la sphère **41** se trouve sensiblement disposée à l'extrémité d'un corps **42** de forme tronconique d'axe Δ', sensiblement perpendiculaire à l'axe **R'₂** de rotation de la tête de support **37.** La sphère **41** est alors adaptée dans le corps **42,** de manière à pouvoir rouler sur le panneau **2,** comme cela ressortira de la suite. Par ailleurs, de manière préférée, l'élément de maintien 13 est adapté de manière amovible sur la tête support 37, de façon à pouvoir être changé rapidement ou, encore, remplacé par un outil. A cet effet, de manière préférée, la tête **37** est, comme la tête support **27,** équipée de moyens d'entraînement en rotation d'un outil autour de l'axe Δ', ces moyens d'entraînement étant pilotés par les moyens de commande **22.**

Le dispositif d'usinage ainsi constitué est alors mis en oeuvre de la façon suivante. Tout d'abord, un panneau **2** est mis en place au niveau de la fenêtre **4.** A cet effet, selon l'exemple illustré, le châssis **3** présente une fenêtre latérale **50** par laquelle les moyens de support, constitués par le cadre mobile **5,** sont engagés pour venir placer le plateau **2** entre l'outil **11** et l'élément de maintien **13,** comme illustré à la **fig. 2****.** Dans cet état, le cadre **5** est alors verrouillé sur le châssis **3,** de manière à ce que le panneau **2 soit** parfaitement immobile par rapport au châssis **3.**

Une fois cet assujettissement réalisé et conformément à une caractéristique essentielle de l'invention, l'unité de commande **22** pilote le fonctionnement des moyens **10** de déplacement de l'outil **11** et des moyens de déplacement **12** de l'élément de maintien **13,** de manière à venir placer l'outil **11** en fonctionnement au contact d'une face **2_{T},** dite d'usinage, du panneau **2** au niveau d'une zone **50,** dite de travail, comme cela est illustré à la **fig. 3****.** De manière sensiblement analogue, l'unité de commande **22** pilote le fonctionnement des moyens de déplacement **12,** de manière à venir placer l'élément de maintien **13** et, plus particulièrement, la sphère **41,** en appui sur une face **2_{M},** dite de maintien du panneau **2,** au niveau d'une zone de maintien **52,** située sur la face de maintien **2_{M}** à l'opposé de la face d'usinage **2_{T},** la zone de maintien 52 étant située à l'opposé, par rapport au panneau **2,** de la zone de travail 50.

Une fois ces placements réalisés, l'unité **22** commande un déplacement coordonné de l'outil d'usinage **11** en fonctionnement et de l'élément de maintien **13** en appui sur le panneau **2,** de manière à usiner, en partie au moins, la face d'usinage **2_{T}** du panneau **2.**

Conformément à une caractéristique essentielle de l'invention, l'unité de commande assure le déplacement coordonné de l'outil **11** et de l'élément de maintien **13,** de manière à conserver, au cours de ce déplacement conjoint, l'opposition des zones d'appui **52** et de travail **50.** Pendant ce déplacement, la sphère **41** roule alors sur la face de maintien **2_{M}** du panneau **2.** C'est-à-dire que le déplacement de l'outil **11** et de l'élément de maintien **13,** par rapport au panneau, possède une décomposition, selon le plan tangent et le plan normal à la surface du panneau au niveau de la zone d'usinage, dont la composante tangentielle au moins est non nulle. Le mouvement coordonné possède donc au moins une composante tangente à la surface du panneau et, dans certaines phases de l'usinage au moins, également une composante normale à la surface du panneau, comme cela est le cas pour l'outils lors de l'ajustement de la profondeur de passe notamment.

De manière préférée, l'unité **22** commande ces déplacements de manière à conserver, pendant toute la phase d'usinage du panneau **2,** d'une part, la perpendicularité de l'axe Δ' d'appui de l'élément de maintien **13** avec la surface de la zone d'appui **52** et, d'autre part, la conjugaison de l'axe Δ' et de l'axe A de rotation de l'outil **11,** de sorte que, au cours de toute la phase d'usinage et de déplacement coordonné, les axes Δ et Δ' sont confondus.

Ainsi, il est possible, par l'association des éléments de maintien et de l'outil d'usinage **11,** d'assurer un usinage de grande précision du panneau **2,** sans déformation de ce panneau. L'association de l'élément de maintien **13** et de l'outil d'usinage **11,** avec les capacités de précision des moyens de commande numérique équipant l'unité de commande **22,** permet alors de réaliser des usinages présentant des profondeurs de passe ou d'usinage différentes en différents points du panneau 2, en fonction des résistances recherchées pour ce dernier. Cette grande précision est rendue possible par, notamment, l'équilibre des forces d'usinage et de maintien exercées par l'outil **11** et l'élément de maintien **13** de part et d'autre du panneau **2.**

Dans une forme préférée mais non strictement nécessaire, il peut être, en vue d'obtenir une parfaite précision, envisagé de mettre en oeuvre des moyens **55** de télémétrie, par exemple des moyens de télémétrie laser permettant d'effectuer une cartographie particulièrement précise de la face de maintien 2_{M} du panneau **2** avant usinage de ce dernier. Cette télémétrie permet ainsi d'obtenir un parfait référentiel qui permettra de connaître très précisément l'épaisseur du panneau **2** en tous points de ce dernier après usinage. En effet, l'épaisseur résiduelle sera alors déterminée par la distance entre l'extrémité de l'outil **11** et l'élément de maintien **13** et, plus particulièrement, la sphère **41** au cours de l'usinage, cette distance correspondant alors à l'épaisseur résiduelle du **panneau 2** après usinage.

Conformément à une autre caractéristique de l'invention, il peut également être envisagé de mettre en oeuvre des moyens de télémétrie **56** permettant de mesurer, avec précision, les coordonnées de la face de travail **2_{T}** du panneau. Ainsi, la mise en oeuvre combinée des moyens de télémétrie **55** et **56** permet d'avoir une parfaite connaissance de la géométrie du panneau **2** avant et après usinage.

Une fois l'usinage du panneau **2** réalisé, le cadre **5** est déverrouillé pour être retiré et permettre la mise en oeuvre d'un autre cadre.

L'invention ainsi constituée permet donc un travail en temps masqué et il est possible, par la mise en oeuvre de différents cadres, d'assurer un usinage de différents types de panneaux **2.**

Il est à noter que, selon l'exemple illustré, le cadre **5** est pourvu d'une traverse **57,** mobile en translation et permettant d'ajuster les dimensions utiles du cadre **5,** de manière à permettre une prise en charge avec un seul type de cadre de panneau présentant différentes dimensions.

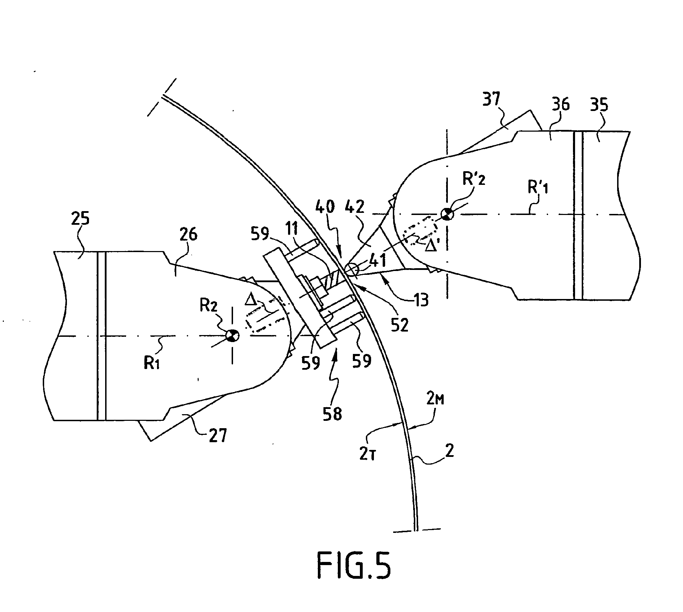

Selon l'invention, il est également possible de mettre, au niveau de la zone de travail 50, au moins un élément de contre appui **58,** tel qu'illustré à la **fig. 5****.** Selon cet exemple, l'élément de contre appui **58** comprend trois doigts **59,** télescopiques isostatiques en contact permanent avec la face de travail 2T du panneau 2. Les doigts **59** sont, de préférence, disposés selon un triangle, bien que toute autre configuration puisse être envisagée.

Les doigts **59,** constitutifs de l'élément de contre appui, permettent d'éviter tout phénomène d'avalement du panneau par l'outil **11** et peuvent assurer également un amortissement de vibrations d'usinage.

Par ailleurs, selon une autre variante de réalisation de l'invention, il est mis en oeuvre, au niveau de la tête porte-outil **27,** des moyens de déplacement en translation de l'outil selon la direction Δ perpendiculaire à l'axe de rotation **R₂.** De même, il est également mis en oeuvre, au niveau de la tête porte-élément, de maintien **37,** des moyens de déplacement en translation de l'élément de maintien selon la direction Δ' perpendiculaire à l'axe de rotation **R'₂.** Bien entendu, ces moyens de déplacement en translation sont associés à des moyens moteurs pilotés par l'unité de commande.

Une telle configuration est particulièrement adaptée pour assurer un usinage de la coque, de manière à la rendre parfaitement conforme au modèle théorique recherché.

Dans ce cas, l'unité de commande assurera le pilotage de l'installation sur la base du fichier de définition tridimensionnel théorique de la coque à réaliser et pilotera alors le fonctionnement des différents organes du dispositif d'usinage à cet effet.

Bien entendu, le dispositif d'usinage selon l'invention peut, également, être piloté dans le cadre d'un mode d'usinage, qui pourrait être qualifié de correctif, dans la mesure où, après une phase de télémétrie permettant de détecter la forme réelle de la coque, l'unité de commande pilotera le fonctionnement du dispositif pour atteindre la forme recherchée à partir de la forme réelle.

De tels usinages en trois dimensions d'une coque sont particulièrement favorisés par la cinématique des extrémités des bras **25** et **26** et des supports d'outils 26 et d'élément de maintien, tel qu'illustré à la **fig. 3****.**

Cependant, dans certaines combinaisons de mouvement, l'unité de commande éprouve des difficultés à calculer les rotations selon les axes **R₁, R₂** et **R'₁, R'₂** pour atteindre les zones d'usinage et d'appui.

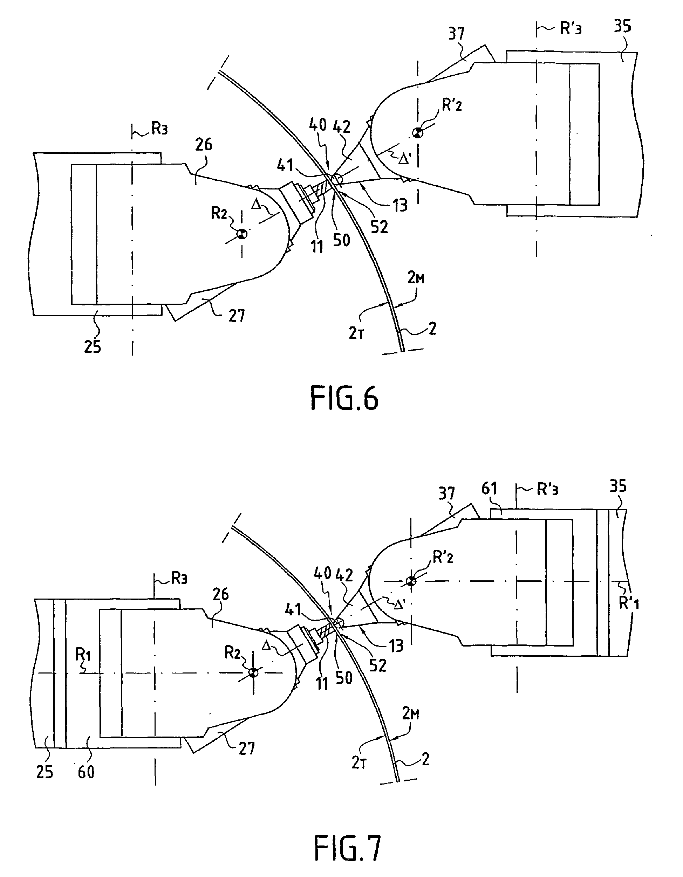

Afin d'apporter une solution à ces difficultés de calcul et de pilotage associé, l'invention propose, dans une forme de réalisation, telle que plus particulièrement illustrée à la **fig. 6****,** de supprimer les mouvements de rotation autour des axes **R₁** et **R'₁** des supports de tête **26** et **36.** Selon cette variante, les mouvements de rotation selon **R₁** et **R'₁** sont remplacés par une rotation des supports de tête **26, 36** autour d'axes, respectivement **R₃** et **R'₃,** sensiblement verticaux ou contenus dans un plan vertical. Dans cette configuration, les axes de rotation **R₂** et **R'₂** sont placés de manière à être perpendiculaires, respectivement, aux axes **R₃** et **R'₃.** Bien entendu, le dispositif d'usinage comprend les moyens moteurs pilotés par l'unité de commande et associés en rotation autour des axes **R₃** et R'₃.

La **fig. 7** illustre une variante de réalisation du dispositif d'usinage, tel qu'illustré à la **fig. 6****.** Selon cette variante de réalisation, les mouvements de rotation selon les axes **R₁** et **R'₁** sont combinés aux mouvements de rotation selon les axes **R₂, R₃** et **R'₂, R'₃.**

A cet effet, l'extrémité du bras **25** comprend un berceau **60,** mobile en rotation autour de l'axe horizontal **R₁** parallèle à l'axe **Y.** Le support de tête **26** est alors adapté sur le berceau **60** en étant mobile par rapport à ce dernier en rotation autour de l'axe **R₃** perpendiculaire à l'axe **R₁,** tandis que la tête porte-outil **27** est mobile en rotation par rapport au support **26** selon l'axe **R₂** perpendiculaire, à la fois, à l'axe **R₁** et à l'axe **R₃.** L'ensemble comprenant l'extrémité du bras **35** sur laquelle est adapté le berceau **60,** le support de tête **26,** et la tête porte-outil **27** forme ce qui pourrait être appelé un équipage de tête.

De la même manière, l'extrémité du bras **35** comprend un berceau **61,** mobile en rotation autour de l'axe horizontal **R'₁.**

Le support de tête **36** est adapté sur le berceau **61** en étant mobile par rapport audit berceau en rotation autour de l'axe **R'₃** perpendiculaire à l'axe **R'₁.** Enfin, la tête porte-élément de maintien **37** est mobile en rotation par rapport au support 37 selon l'axe **R'₂** perpendiculaire aux axes de rotation **R'₁** et **R'₃.**

Dans cette configuration, il existe une redondance entre les axes **R₁, R₂, R₃,** d'une part, et les axes **R'₁, R'₂, R'₃,** d'autre part. L'unité de commande 22 assure alors le pilotage du dispositif d'usinage en donnant une priorité aux combinaisons de mouvement selon **R₂, R₃** et, respectivement, **R'₂, R'₃** par rapport aux rotations selon **R₁,** respectivement **R'₁.**

Bien entendu, il est également possible de prévoir, pour les formes de réalisation selon les **fig. 6** et **7****,** des mouvements de translation de l'outil selon l'axe Δ et de l'élément de maintien selon l'axe Δ'.

## Revendications

1. Procédé d'usinage d'un panneau **(2)** mettant en oeuvre :
■ un placement d'au moins un outil d'usinage **(11)** au niveau d'une zone de travail **(50)** d'une face, dite d'usinage (2_{T}), du panneau **(2),**
■ un placement d'au moins un élément de maintien **(13)** au niveau d'une zone d'appui **(52)** située, d'une part, sur une face **(2_{M}),** dite de maintien, du panneau **(2)** opposée à la face d'usinage(2_{T}) et, d'autre part, à l'opposé par rapport au panneau **(2)** de la zone de travail (50), l'élément de maintient (13) étant adapté pour agir sur la zone d'appui **(52)** et **caractérisé par**
■ un déplacement coordonné, au niveau du panneau et selon un mouvement présentant au moins une composante tangente à la surface du panneau, de l'outil d'usinage **(11)** en fonctionnement et de l'élément de maintien **(13)** agissant sur la zone d'appui **(52)** de manière à conserver, au cours du déplacement, l'opposition des zones d'appui **(52)** et de travail **(50)** pour usiner une partie au moins de la face d'usinage.

2. Procédé d'usinage selon la revendication 1, **caractérisé en ce que** l'élément de maintien (13) est adapté pour agir sur la zone d'appui en étant placé au contact du panneau **(2)** pendant le déplacement coordonné.

3. Procédé d'usinage selon la revendication 1 ou 2, **caractérisé en ce que** l'élément de maintien **(13)** exerce, sur le panneau, une force d'appui de direction Δ' perpendiculaire à la surface de la zone d'appui **(52).**

4. Procédé d'usinage selon l'une des revendications 1 à 3, **caractérisé en ce qu'**il met en oeuvre une application d'au moins un élément de contre appui **(58)** au niveau de la zone de travail **(50).**

5. Procédé d'usinage selon l'une des revendications 1 à 4, **caractérisé en ce que** l'outil d'usinage **(11)** est adapté pour réaliser un usinage par arrachement ou enlèvement de matière et se trouve animé d'un mouvement de rotation sur lui-même d'axe Δ.

6. Procédé d'usinage selon la revendication 5, **caractérisé en ce que** l'élément de maintien **(13)** exerce, sur la zone d'appui, une force de direction Δ' et **en ce que**, en cours d'usinage,pendant le déplacement coordonné de l'outil d'usinage **(11)** et de l'élément de maintien **(13),** les axes Δ et Δ' sont sensiblement confondus.

7. Procédé d'usinage selon l'une des revendications 1 à 6, **caractérisé en ce qu'**il met en oeuvre un amortissement des vibrations d'usinage au moins au niveau de l'élément de maintien **(13).**

8. Procédé d'usinage selon l'une des revendications 1 à 7, **caractérisé en ce que** l'élément de maintien **(13)** et l'outil d'usinage **(11)** sont chacun déplacés selon au moins cinq degrés de liberté.

9. Procédé d'usinage selon la revendication 8, **caractérisé en ce que** l'élément de maintien **(13)** et l'outil d'usinage **(11)** sont chacun déplacés selon trois degrés de liberté de déplacement en translation d'axes **X, Y, Z,** respectivement **X', Y', Z'** et deux degrés de déplacement en rotation d'axes **R₁, R₂,** respectivement **R'₁, R'₂,** où **R₁, R'₁** sont parallèles aux axes **Y, Y'** respectivement et **R₂, R'₂** sont parallèles aux plans **X, Z,** respectivement **X', Z'.**

10. Procédé d'usinage selon l'une des revendications 1 à 9, **caractérisé en ce que** le panneau à usiner **(2)** est placé selon une orientation sensiblement verticale.

11. Procédé d'usinage selon l'une des revendications 1 à 9, **caractérisé en ce que** le panneau **(2)** est sensiblement immobile pendant son usinage.

12. Procédé d'usinage selon l'une des revendications 1 à 11, **caractérisé en ce qu'**il met en oeuvre une détermination de la géométrie réelle de la face de maintien **(2_{M})** avant usinage, ainsi qu'un usinage du panneau **(2)** à une épaisseur d'usinage prédéterminée en plaçant, pendant 1e déplacement coordonné d'usinage, l'élément de maintien **(13)** et l'outil d'usinage **(11)** à une distance correspondant à l'épaisseur prédéterminée.

13. Procédé d'usinage selon l'une des revendications 1 à 12, **caractérisé en ce que** l'élément de maintien assure un maintien de la face de maintien **(2_{M})** du panneau sans usinage de cette face de maintien **(2_{M}).**

14. Dispositif pour l'usinage d'au moins un panneau **(2)** comprenant :
■ des moyens **(5)** de support du panneau **(2),** adaptés pour autoriser un accès simultané à deux faces opposées du panneau dites d'usinage **(2_{T})** et de maintien **(2_{M})**,
■ des moyens (10) de déplacement d'au moins un outil d'usinage **(11),**
■ des moyens **(12)** de déplacement d'au moins un élément de maintien **(13)**
■ une unité **(22)** de commande des moyens de déplacement **(10, 12)** de l'outil d'usinage **(11)** et de l'élément de maintien **(13),** unité **(22)** qui est adaptée pour lors d'une phase d'usinage du panneau **(2):**
- placer l'outil d'usinage **(11)** au niveau d'une zone de travail **(50)** de la face d'usinage **(2_{T})** du panneau **(2),**
- placer l'élément de maintien **(13)** au niveau d'une zone d'appui **(52)** située sur la face de maintien **((2_{M})** et à l'opposé de la zone de travail **(50),**
**caractérisé en ce que** il comprend en outre un élément de maintien (13) adapté pour agir sur la face de maintien en déplacement, et **en ce que** l'unité (22) est adaptée pour assurer un déplacement coordonné, au niveau du panneau et selon un mouvement présentant au moins une composante tangente à la surface du panneau **(2),** de l'outil **d'usinage (11)** en fonctionnement et de l'élément de maintien (13), agissant sur la zone d'appui de manière à conserver, au cours du déplacement, l'opposition des zones d'appui **(52)** et de travail **(50)** pour usiner une partie au moins de la face **(2_{T})** d'usinage du panneau (2).

15. Dispositif selon la revendication 14 **caractérisé en ce que** l'élément de maintien (13) est adapté pour être placé au contact du panneau (2) pendant le déplacement coordonné.

16. Dispositif selon la revendication 14 ou 15, **caractérisé , en ce que** les moyens de déplacement **(10, 12)** de l'outil **(11)** et de l'élément de maintien **(13)** présentent chacun au moins cinq axes de déplacement, de manière à conférer à l'outil (11) et à l'élément de maintien **(13)** au moins cinq degrés de liberté.

17. Dispositif selon la revendication 16, **caractérisé en ce que** les moyens de déplacement **(10, 12)** de l'outil **(11)** et de l'élément de maintien **(13)** comprennent chacun trois degrés de déplacement en translation d'axe **X, Y, Z,** respectivement **X', Y', Z'** et deux degrés de déplacement en rotation d'axes **R₁, R₂** et, respectivement **R'₁, R'₂,** où **R₁** et **R'₁** sont parallèles à l'axe **Y,** respectivement **Y'** et **R₂, R'₂** sont parallèles aux plans définis par les axes **X, Z,** respectivement **X', Z'.**

18. Dispositif selon la revendication 16 ou 17, **caractérisé en ce que** :
■ les moyens **(10)** de déplacement de l'outil **(11)** comprennent :
- une poutre **(20)** mobile en translation le long d'au moins une voie de guidage **(21)** d'axe **X** supportée par un châssis **(3)** et associée à des moyens moteurs pilotés par l'unité de commande **(22),**
- un chariot **(23)** mobile en translation le long d'une voie de guidage **(24)** d'axe **Z,** portée par la poutre **(20)** et associé à des moyens moteurs pilotés par l'unité de commande **(22),** l'axe **Z** étant sensiblement perpendiculaire à l'axe **X,**
- un bras **(25)** télescopique en translation, d'axe **Y** porté par le chariot **(23)** et associé à des moyens moteurs pilotés par l'unité de commande **(22),** l'axe **Y** étant sensiblement perpendiculaire au plan défini par les axes **X, Z,**
- un support de tête **(26)** adapté à une extrémité du bras télescopique **(25)** et mobile en rotation par rapport au bras selon un axe **R₁** parallèle à l'axe **Y** et associé à des moyens moteurs pilotés par l'unité de commande **(22),**
- une tête porte outil **(27),** adaptée sur le support de tête **(26),** mobile en rotation par rapport au support **(26)** selon un axe **R₂** perpendiculaire à l'axe **Y** et associé à des moyens moteurs pilotés par l'unité de commande **(22),**
■ les moyens de déplacement **(12)** de l'élément de maintien **(13)** comprennent :
- une poutre **(30)** mobile en translation le long d'au moins une voie de guidage d'axe **X'** supportée par le châssis **(3)** et associée à des moyens moteurs pilotés par l'unité de commande **(22),**
- un chariot **(33)** mobile en translation le long d'une voie de guidage **(31)** d'axe **Z',** portée par la poutre **(30)** et associée à des moyens moteurs pilotés par l'unité de commande **(22),** l'axe **Z'** étant sensiblement perpendiculaire à l'axe **X',**
- un bras **(35)** télescopique en translation, d'axe **Y'** porté par le chariot **(33)** et associé à des moyens moteurs pilotés par l'unité de commande **(22),** l'axe **Y'** étant sensiblement perpendiculaire au plan défini par les axes **X', Z',**
- un support de tête **(36)** adapté à une extrémité du bras télescopique **(35)** et mobile en rotation par rapport au bras **(35)** selon un axe **R'₁** parallèle à l'axe **Y'** et associé à des moyens moteurs pilotés par l'unité de commande **(22),**
- une tête **(37)** porte élément de maintien, adaptée sur le support de tête **(36),** mobile par rapport au support en rotation d'axe **R'₂** perpendiculaire à l'axe **Y'** et associé à des moyens moteurs pilotés par l'unité de commande **(22),**
■ et **en ce que** les moyens de support **(5)** sont adaptés sur le châssis, de manière à être interposés, entre les moyens de déplacement **(10)** de l'outil **(11)** et les moyens **(1)** de déplacement **(12)** de l'élément de maintien **(13).**

19. Dispositif selon la revendication 18, **caractérisé en ce que** :
■ le support **(26)** de la tête porte outil **(27)** est, d'une part, adapté sur un berceau **(60)** équipant l'extrémité du bras télescopique **(25)** et étant mobile en rotation autour de l'axe **R₁** et, d'autre part, mobile par rapport au berceau **(60)** en rotation autour d'un axe **R₃** perpendiculaire à l'axe **R₁,**
■ le support **(36)** de la tête porte outil **(37)** est, d'une part, adapté sur un berceau **(61)** équipant l'extrémité du bras télescopique **(35)** et étant mobile en rotation autour de l'axe **R'₁** et, d'autre part, mobile par rapport au berceau **(61)** en rotation autour d'un axe **R'₃** perpendiculaire à l'axe **R'₁.**

20. Dispositif selon l'une des revendications **17** à **19**, **caractérisé en ce que** les axes **X, Z** et **X', Z'** définissent des plans verticaux sensiblement parallèles.

21. Dispositif selon l'une des revendications **18** à **20**, **caractérisé en ce que** la tête porte outil **(27)** comprend des moyens d'entraînement en rotation de l'outil selon un axe Δ sensiblement perpendiculaire à l'axe **R₂.**

22. Dispositif selon l'une des revendications **17 à 21, caractérisé en ce qu'**il comprend :
■ des moyens de déplacement en translation de l'outil **(11)** selon une direction Δ perpendiculaire à l'axe de rotation **(R₂)**,
■ et des moyens de déplacement en translation de l'élément de maintien **(13)** selon une direction Δ' perpendiculaire à l'axe de rotation **(R'₂).**

23. Dispositif selon l'une des revendications **14** à **22**, **caractérisé en ce que** les moyens de déplacement **(10)** de l'outil **(11)** comprennent au moins un élément de contre appui **(55)** sur la face d'usinage **(2T)** du panneau **(2_{T})**.

24. Dispositif selon l'une des revendications **14** à **23**, **caractérisé en ce qu'**il. comprend des moyens d'amortissement **(41)** des vibrations d'usinage.

25. Dispositif selon la revendication 24, **caractérisé en ce que** les moyens d'amortissement **(41)** sont adaptés sur les moyens de déplacement **(12)** de l'élément de maintien **(13).**

26. Dispositif selon l'une des revendications **14** à **25**, **caractérisé en ce que** l'élément de maintien **(13)** comprend au moins une sphère d'appui **(41)** destinée à rouler sur la face de maintien **(2_{M})** du panneau **(2)** pendant l'usinage.

27. Dispositif selon la revendication 25, **caractérisé en ce que** la sphère d'appui (41) est réalisée en matériau élastiquement déformable, de manière à amortir les vibrations d'usinage.

28. Dispositif selon l'une des revendications 14 à 27, **caractérisé en ce que** les moyens de support **(5)** du panneau **(2)** sont amovibles et **en ce qu'**il comprend des moyens d'immobilisation **(6)** des moyens **support (5)** pendant l'usinage du panneau.

29. Dispositif selon la revendication **28**, **caractérisé en ce que** les moyens de support comprennent un cadre amovible **(5),** équipé de moyens de fixation d'un panneau à usiner.

30. Dispositif selon la revendication **29, caractérisé en ce que** le cadre comprend au moins une traverse mobile, permettant un ajustement des dimensions du cadre.

## Claims

1. A method for machining a panel (2) utilising :
a location of at least one machine tool (11) at the level of working area (50) of a face, so-called machining (2_{T}), of the panel (2),
a location of at least one holding element (13) at the level of a support area (52) located, on the one hand, on a face (2_{M}), so-called holding, of the panel (2) opposite the machining face (2_{T}) and, on the other hand, opposite relative to the panel (2) of the working area (50), the holding element (13) being adapted to act on the support area (52), and
**characterised by**
a coordinated dislocation, at the level of the panel and according to movement having at least one component tangential to the surface of the panel, of the machine tool (11) in operation and of the holding element (13) acting on the support area (52), so as to conserve, during dislocation, the opposition of the support (52) and work (50) areas to machine part at least of the machining face.

2. The method for machining according to claim 1, **characterised in that** the holding element (13) is adapted to act on the support area by being placed in contact with the panel (2) during coordinated dislocation.

3. The method for machining according to claim 1 or 2, **characterised in that** the holding element (13) exerts, on the panel, a support force of direction Δ' perpendicular to the surface of the support area (52).

4. The method for machining according to any of claims 1 to 3, **characterised in that** it uses an application of at least one counter-support element (58) at the level of the working area (50).

5. The method for machining according to any of claims 1 to 4, **characterised in that** the machine tool (11) is adapted to execute machining by snatching or removal of material and is animated by rotation movement on itself of axis Δ.

6. The method for machining according to claim 5, **characterised in that** the holding element (13) exerts, on the support area, a directional force Δ' and **in that**, during machining, during coordinated dislocation of the machine tool (11) and of the holding element (13) the axes Δ and Δ' are substantially combined.

7. The method for machining according to any of claims 1 to 6, **characterised in that** it uses dampening of the machining vibrations at least at the level of the holding element (13).

8. The method for machining according to any of claims 1 to 7, **characterised in that** the holding element (13) and the machine tool (11) are each displaced according to at least five degrees of liberty.

9. The method for machining according to claim 8, **characterised in that** the holding element (13) and the machine tool (11) are each displaced according to three degrees of liberty of dislocation in translation of axes X, Y, Z, respectively X', Y', Z' and two degrees of dislocation in rotation of axes R₁, R₂, respectively R'₁, R'₂, where R₁, R'₁ are parallel to the axes Y, Y' respectively and R₂, R'₂ are parallel to the planes X, Z, respectively X', Z'.

10. The method for machining according to any of claims 1 to 9, **characterised in that** the panel to be machined (2) is placed according to a substantially vertical orientation.

11. The method for machining according to any of claims 1 to 9, **characterised in that** the panel (2) is substantially immobile during its machining.

12. The method for machining according to any of claims 1 to 11, **characterised in that** it uses determination of the real geometry of the holding face (2_{M}) before machining, as well as machining of the panel (2) to a predetermined machining thickness by placing, during the coordinated machining dislocation, the holding element (13) and the machine tool (11) at a distance corresponding to the predetermined thickness.

13. The method for machining according to any of claims 1 to 12, **characterised in that** the holding element ensures retention of the holding face (2_{M}) of the panel without machining of this holding face (2_{M}).

14. The device for machining at least one panel (2) comprising :
support means (5) of the panel (2), adapted to allow simultaneous access to two opposite faces of the panel, known as machining (2_{T}) and holding (2_{M}),
dislocation means (10) of at least one machine tool (11),
dislocation means (12) of at least one holding element (13),
a control unit (22) of the dislocation means (10, 12) of the machine tool (11) and of the holding element (13), unit (22) which is adapted during a machining phase of the panel (2), to :
- place the machine tool (11) at the level of a working area (50) of the machining face (2_{T}) of the panel (2),
- place the holding element (13) at the level of a support area (52) located on the holding surface (2_{M}) and opposite the working area (50),
**characterised in that** it further comprises a holding element (13) adapted to act on the holding face by displacing, and **in that** the unit (22) is adapted to
ensure coordinated dislocation, at the level of the panel and according to a movement having at least one component tangential to the surface of the panel (2) of the machine tool (11) in operation and of the holding element (13) acting on the support area, so as to conserve, during dislocation, the opposition of the support (52) and work (50) areas to machine part at least of the machining face (2_{T}) of the panel (2).

15. The device according to claim 14, **characterised in that** the holding element (13) is adapted to be placed in contact with the panel (2) during coordinated dislocation.

16. The device according to claim 14 or 15,
**characterised in that** the dislocation means (10, 12) of the tool (11) and of the holding element (13) each have at least five axes of dislocation, so as to impart to the tool (11) and to the holding element (13) at least five degrees of liberty.

17. The device according to claim 16, **characterised in that** the dislocation means (10, 12) of the tool (11) and of the holding element (13) each comprise three degrees of dislocation in translation of axis X, Y, Z, respectively X', Y', Z' and two degrees of dislocation in rotation of axes R₁, R₂ and, respectively R'₁, R'₂, where R₁ and R'₁, are parallel to the axis Y, respectively Y' and R₂, R'₂ are parallel to the planes defined by the axes X, Z, respectively X', Z'.

18. The device according to claim 16 or 17,
**characterised in that**:
the dislocation means (10) of the tool (11) comprise :
- a beam (20) mobile in translation along at least one guide path (21) of axis x supported by a chassis (3) and associated with motor means controlled by the control unit (22),
- a trolley (23) mobile in translation along a guide path (24) of axis Z, borne by the beam (20) and associated with motor means controlled by the control unit (22), the axis Z being substantially perpendicular to the axis X,
- an arm (25) telescopic in translation, of axis Y borne by the trolley (23) and associated with motor means controlled by the control unit (22), the axis Y being substantially perpendicular to the plane defined by the axes X, Z,
- a head support (26) adapted to an end of the telescopic arm (25) and mobile in rotation relative to the arm according to an axis R₁ parallel to the axis Y and associated with motor means controlled by the control unit (22),
- a head machine tool (27), adapted on the head support (26), mobile in rotation relative to the support (26) according to an axis R₂ perpendicular to the axis Y and associated with motor means controlled by the control unit (22),
the dislocation means (12) of the holding element (13) comprising :
- a beam (30) mobile in translation along at least one guide path of axis X¹ supported by the chassis (3) and associated with motor means controlled by the control unit (22),
- a trolley (33) mobile in translation along a guide path (31) of axis Z', borne by the beam (30) and associated with motor means controlled by the control unit (22), the axis Z' being substantially perpendicular to the axis X',
- an arm (35) telescopic in translation, of axis Y' borne by the trolley (33) and associated with motor means controlled by the control unit (22), the axis Y' being substantially perpendicular to the plane defined by the axes X', Z',
- a head support (36) adapted to an end of the telescopic arm (35) and mobile in rotation relative to the arm (35) according to an axis R'₁ parallel to the axis Y' and associated with motor means controlled by the control unit (22),
- a head machine holding element (37), adapted on the head support (36), mobile relative to the support in rotation of axis R'₂ perpendicular to the axis Y' and associated with motor means controlled by the control unit (22),
and **in that** the support means (5) are adapted to the chassis, so as to be interposed between the dislocation means (10) of the tool (11) and the dislocation means (12) of the holding element (13).

19. The device according to claim 18, **characterised in that**:
the support (26) of the head machine tool (27) is, on the one hand, adapted to a cradle (60) equipping the end of the telescopic arm (25) and being mobile in rotation about the axis R₁ and, on the other hand, mobile relative to the cradle (60) in rotation about an axis R₃ perpendicular to the axis R₁,
the support (36) of the head machine tool (37) is, on the one hand, adapted on a cradle (61) equipping the end of the telescopic arm (35) and being mobile in rotation about the axis R'₁ and, on the other hand, mobile relative to the cradle (61) in rotation about an axis R'₃ perpendicular to the axis R'₁.

20. The device according to any of claims 17 to 19, **characterised in that** the axes X, Z and X', Z' define substantially parallel vertical planes.

21. The device according to any of claims 18 to 20, **characterised in that** the head machine tool (27) comprises means for driving the tool in rotation according to an axis Δ substantially perpendicular to the axis R₂.

22. The device according to any of claims 17 to 21, **characterised in that** it comprises :
dislocation means in translation of the tool (11) according to a direction Δ perpendicular to the axis of rotation (R₂),
and dislocation means in translation of the holding element (13) according to a direction Δ' perpendicular to the axis of rotation (R'₂).

23. The device according to any of claims 14 to 22, **characterised in that** the dislocation means (10) of the tool (11) comprise at least one counter support element (55) on the machining face (2_{T}) of the panel (2).

24. The device according to any of claims 14 to 23, **characterised in that** it comprises damping means (41) of the machining vibrations.

25. The device according to claim 24, **characterised in that** the damping means (41) are adapted on the dislocation means (12) of the holding element (13).

26. The device according to any of claims 14 to 25, **characterised in that** the holding element (13) comprises at least one support sphere (41) intended to roll on the holding face (2_{M}) of the panel (2) during machining.

27. The device according to claim 25, **characterised in that** the support sphere (41) is made of an elastically deformable material, so as to dampen the machining vibrations.

28. The device according to any of claims 14 to 27, **characterised in that** the support means (5) of the panel (2) are removable and **in that** it comprises immobilisation means (6) of the support means (5) during machining of the panel.

29. The device according to claim 28, **characterised in that** the support means comprise a removable frame (5), equipped with fixing means for a panel to be machined.

30. The device according to claim 29, **characterised in that** the frame comprises at least one mobile cross member, allowing adjustment of the dimensions of the frame.

## Patentansprüche

1. Verfahren zur Bearbeitung einer Platte (2), umfassend:
- ein Anordnen wenigstens eines Bearbeitungswerkzeugs (11) im Bereich einer Arbeitszone (50) einer sogenannten Bearbeitungsfläche (2_{T}) der Platte (2),
- ein Anordnen wenigstens eines Halteelements (13) im Bereich einer Stützzone (52), die sich einerseits auf einer sogenannten Haltefläche (2_{M}) der Platte (2) gegenüber der Bearbeitungsfläche (2_{T}) und andererseits in Bezug zur Platte (2) gegenüber der Arbeitszone (50) befindet, wobei das Halteelement (13) dazu vorgesehen ist, auf die Stützzone (52) einzuwirken, und **gekennzeichnet durch**
- ein koordiniertes Verschieben im Bereich der Platte und gemäß einer Bewegung, die wenigstens eine die Oberfläche der Platte tangierende Komponente aufweist, des Bearbeitungswerkzeugs (11) während des Betriebs und des Halteelements (13), das auf die Stützzone (52) einwirkt, um während der Verschiebung die Gegenüberstellung der Stütz- (52) und Arbeitszonen (50) beizubehalten, um wenigstens einen Teil der Bearbeitungsfläche zu bearbeiten.

2. Bearbeitungsverfahren nach Anspruch 1, **dadurch gekennzeichnet, daß** das Halteelement (13) dazu vorgesehen ist, auf die Stützzone einzuwirken, wobei es während der koordinierten Verschiebung in Kontakt mit der Platte (2) angeordnet ist.

3. Bearbeitungsverfahren nach Anspruch 1 oder 2, **dadurch gekennzeichnet, daß** das Halteelement (13) auf die Platte eine Stützkraft mit der Richtung Δ' senkrecht auf die Oberfläche der Stützzone (52) ausübt.

4. Bearbeitungsverfahren nach einem der Ansprüche 1 bis 3, **dadurch gekennzeichnet, daß** es ein Anlegen von wenigstens einem Gegenstützelement (58) im Bereich der Arbeitszone (50) einsetzt.

5. Bearbeitungsverfahren nach einem der Ansprüche 1 bis 4, **dadurch gekennzeichnet, daß** das Bearbeitungswerkzeug (11) dazu vorgesehen ist, eine Bearbeitung durch Materialabbruch oder -abhebung durchzuführen, und eine Drehbewegung um sich selbst um die Achse Δ ausführt.

6. Bearbeitungsverfahren nach Anspruch 5, **dadurch gekennzeichnet, daß** das Halteelement (13) auf die Stützzone eine Kraft mit der Richtung Δ' ausübt, und daß während der Bearbeitung während der koordinierten Verschiebung des Bearbeitungswerkzeugs (11) und des Halteelements (13) die Achsen Δ und Δ' im wesentlichen zusammenfallen.

7. Bearbeitungsverfahren nach einem der Ansprüche 1 bis 6, **dadurch gekennzeichnet, daß** es eine Dämpfung der Bearbeitungsschwingungen wenigstens im Bereich des Halteelements (13) einsetzt.

8. Bearbeitungsverfahren nach einem der Ansprüche 1 bis7, **dadurch gekennzeichnet, daß** das Halteelement (13) und das Bearbeitungswerkzeug (11) jeweils mit wenigstens fünf Freiheitsgraden verschoben werden.

9. Bearbeitungsverfahren nach Anspruch 8, **dadurch gekennzeichnet, daß** das Halteelement (13) und das Bearbeitungswerkzeug (11) jeweils mit drei Freiheitsgraden zur Translationsverschiebung mit den Achsen X, Y, Z bzw. X', Y', Z' und zwei Verschiebegraden in Drehung mit den Achsen R₁, R₂ bzw. R'₁, R'₂ verschoben werden, wobei R_{1'} R'₁ parallel zu den Achsen Y, Y' bzw. R₂, R'₂ parallel zu den Ebenen X, Z bzw. X', Z' sind.

10. Bearbeitungsverfahren nach einem der Ansprüche 1 bis 9, **dadurch gekennzeichnet, daß** die zu bearbeitende Platte (2) mit einer im wesentlichen vertikalen Ausrichtung angeordnet ist.

11. Bearbeitungsverfahren nach einem der Ansprüche 1 bis 9, **dadurch gekennzeichnet, daß** die Platte (2) im wesentlichen während ihrer Bearbeitung unbeweglich ist.

12. Bearbeitungsverfahren nach einem der Ansprüche 1 bis 11, **dadurch gekennzeichnet, daß** es eine Bestimmung der tatsächlichen Geometrie der Haltefläche (2_{M}) vor der Bearbeitung sowie eine Bearbeitung der Platte (2) mit einer vorbestimmten Bearbeitungsdicke einsetzt, wobei während der koordinierten Verschiebung zur Bearbeitung das Halteelement (13) und das Bearbeitungselement (11) in einem Abstand angeordnet werden, der der vorbestimmten Dicke entspricht.

13. Bearbeitungsverfahren nach einem der Ansprüche 1 bis 12, **dadurch gekennzeichnet, daß** das Halteelement den Halt der Haltefläche (2_{M}) der Platte ohne Bearbeitung dieser Haltefläche (2_{M}) sichert.

14. Vorrichtung zur Bearbeitung wenigstens einer Platte (2), umfassend:
- Mittel (5) zum Stützen der Platte (2), die dazu ausgeführt sind, einen gleichzeitigen Zugriff auf zwei gegenüber liegende Seiten der Platte, Bearbeitungsfläche (2_{T}) und Haltefläche (2_{M}) genannt, zu gestatten,
- Mittel (10) zum Verschieben wenigstens eines Bearbeitungswerkzeugs (11),
- Mittel (12) zum Verschieben wenigstens eines Halteelements (13),
- eine Einheit (22) zur Steuerung der Verschiebemittel (10, 12) des Bearbeitungswerkzeugs (11) und des Halteelements (13), wobei die Einheit (22) dazu vorgesehen ist, während eines Schrittes der Bearbeitung der Platte (2):
-- das Bearbeitungswerkzeug (11) im Bereich einer Arbeitszone (50) der Bearbeitungsfläche (2_{T}) der Platte (2) anzuordnen,
-- das Halteelement (13) im Bereich einer Stützzone (52) anzuordnen, die sich auf der Haltefläche (2_{M}) und gegenüber der Arbeitszone (50) befindet,
**dadurch gekennzeichnet, daß** sie ferner ein Halteelement (13) umfaßt, das dazu ausgeführt ist, auf die Haltefläche während des Verschiebens einzuwirken, und daß die Einheit (22) dazu vorgesehen ist, eine koordinierte Verschiebung im Bereich der Platte und in einer Bewegung, die wenigstens eine die Oberfläche der Platte (2) tangierende Komponente aufweist, des Bearbeitungswerkzeugs (11) während der Funktion und des Halteelements (13), das auf die Stützzone einwirkt, zu gewährleisten, um während der Verschiebung die Gegenüberstellung der Stütz- (52) und Arbeitszone (50) beizubehalten, um wenigstens einen Teil der Bearbeitungsfläche (2_{T}) der Platte (2) zu bearbeiten.

15. Vorrichtung nach Anspruch 14, **dadurch gekennzeichnet, daß** das Halteelement (13) dazu vorgesehen ist, in Kontakt mit der Platte (2) während der koordinierten Verschiebung angeordnet zu werden.

16. Vorrichtung nach Anspruch 14 oder 15, **dadurch gekennzeichnet, daß** die Verschiebemittel (10, 12) des Werkzeugs (11) und des Halteelements (13) jeweils wenigstens fünf Verschiebeachsen aufweisen, um dem Werkzeug (11) und dem Halteelement (13) wenigstens fünf Freiheitsgrade zu verleihen.

17. Vorrichtung nach Anspruch 16, **dadurch gekennzeichnet, daß** die Verschiebemittel (10, 12) des Werkzeugs (11) und des Halteelements (13) jeweils drei Verschiebegrade in Translation mit der Achse X, Y, Z bzw. X', Y', Z' und zwei Verschiebegrade in Drehung mit den Achsen R₁, R₂ bzw. R'₁, R'₂, wobei R₁ und R'₂ zur Achse Y bzw. Y' parallel sind und R₂, R'₂ zu den Ebenen parallel sind, die von den Achsen X, Z bzw. X', Z' definiert sind.

18. Vorrichtung nach Anspruch 16 oder 17, **dadurch gekennzeichnet, daß**:
- die Mittel (10) zum Verschieben des Werkzeugs (11) umfassen:
-- einen in Translation entlang wenigstens eines Führungsweges (21) beweglichen Träger (20) mit der Achse X, der von einem Gestell (3) getragen wird und mit von der Steuereinheit (22) gesteuerten Antriebsmitteln verbunden ist,
-- einen in Translation entlang eines Führungsweges (24) beweglichen Wagen (23) mit der Achse Z, der vom Träger (20) getragen wird und mit von der Steuereinheit (22) gesteuerten Antriebsmitteln verbunden ist, wobei die Achse Z im wesentlichen senkrecht auf die Achse X ist,
-- einen in Translation teleskopisch verschiebbaren Arm (25) mit der Achse Y, der vom Wagen (23) getragen wird und mit von der Steuereinheit (22) gesteuerten Antriebsmitteln verbunden ist, wobei die Achse Y im wesentlichen senkrecht auf die durch die Achsen X, Z definierte Ebene ist,
-- einen Kopfträger (26), der an einem Ende des Teleskoparms (25) ausgebildet und in Drehung in Bezug zum Arm entlang einer Achse R₁ parallel zur Achse Y beweglich ist und mit von der Steuereinheit (22) gesteuerten Antriebsmitteln verbunden ist,
-- einen Werkzeugtragkopf (27), der am Kopfträger (26) vorgesehen und in Drehung in Bezug zum Träger (26) entlang einer Achse R₂ senkrecht auf die Achse Y beweglich ist und mit von der Steuereinheit (22) gesteuerten Antriebsmitteln verbunden ist,
- wobei die Verschiebemittel (12) des Halteelements (13) umfassen:
-- einen in Translation entlang wenigstens eines Führungsweges beweglichen Träger (30) mit der Achse X', der von dem Gestell (3) getragen wird und mit von der Steuereinheit (22) gesteuerten Antriebsmitteln verbunden ist,
-- einen in Translation entlang eines Führungsweges (31) beweglichen Wagen (33) mit der Achse Z', der vom Träger (30) getragen wird und mit von der Steuereinheit (22) gesteuerten Antriebsmitteln verbunden ist, wobei die Achse Z' im wesentlichen senkrecht auf die Achse X' ist,
-- einen in Translation teleskopisch verschiebbaren Arm (35) mit der Achse Y', der vom Wagen (33) getragen wird und mit von der Steuereinheit (22) gesteuerten Antriebsmitteln verbunden ist, wobei die Achse Y' im wesentlichen senkrecht auf die durch die Achsen X', Z' definierte Ebene ist,
-- einen Kopfträger (36), der an einem Ende des Teleskoparms (35) ausgebildet und in Drehung in Bezug zum Arm (35) entlang einer Achse R'₁ parallel zur Achse Y' beweglich ist und mit von der Steuereinheit (22) gesteuerten Antriebsmitteln verbunden ist,
-- einen Werkzeugtragkopf (37), der am Kopfträger (36) vorgesehen und in Drehung in Bezug zum Träger entlang einer Achse R'₂ senkrecht auf die Achse Y' beweglich ist und mit von der Steuereinheit (22) gesteuerten Antriebsmitteln verbunden ist,
- und daß die Stützmittel (5) am Gestell vorgesehen sind, um zwischen den Verschiebemitteln (10) des Werkzeugs (11) und den Mitteln (1) zum Verschieben (12) des Halteelements (13) angeordnet zu werden.

19. Vorrichtung nach Anspruch 18, **dadurch gekennzeichnet, daß**:
- die Stütze (26) des Werkzeugtragekopfes (27) einerseits an einen Schlitten (60) angepaßt ist, mit dem das Ende des Teleskoparms (25) ausgestattet ist, und der in Drehung um die Achse R₁ beweglich ist, und andererseits in Bezug zum Schlitten (60) in Drehung um eine Achse R₃ senkrecht auf die Achse R₁ beweglich ist,
- die Stütze (36) des Werkzeugtragekopfes (37) einerseits an einen Schlitten (61) angepaßt ist, mit dem das Ende des Teleskoparms (35) ausgestattet ist, und der in Drehung um die Achse R'₁ beweglich ist, und andererseits in Bezug zum Schlitten (61) in Drehung um eine Achse R'₃ senkrecht auf die Achse R'₁ beweglich ist.

20. Vorrichtung nach einem der Ansprüche 17 bis 19, **dadurch gekennzeichnet, daß** die Achsen X, Z und X', Z' im wesentlichen parallele Vertikalebenen definieren.

21. Vorrichtung nach einem der Ansprüche 18 bis 20, **dadurch gekennzeichnet, daß** der Werkzeugtragekopf (27) Mittel zum Drehantrieb des Werkzeugs entlang einer im wesentlichen senkrecht auf die Achse R₂ verlaufenden Achse Δ umfaßt.

22. Vorrichtung nach einem der Ansprüche 17 bis 21, **dadurch gekennzeichnet, daß** sie umfaßt:
- Mittel zur Translationsverschiebung des Werkzeugs (11) in eine Richtung Δ senkrecht auf die Drehachse (R₂),
- und Mittel zur Translationsverschiebung des Halteelements (13) entlang einer Richtung Δ' senkrecht auf die Drehachse (R'₂).

23. Vorrichtung nach einem der Ansprüche 14 bis 22, **dadurch gekennzeichnet, daß** die Verschiebemittel (10) des Werkzeugs (11) wenigstens ein Gegenstützelement (55) auf der Bearbeitungsfläche (2T) der Platte (2_{T}) umfassen.

24. Vorrichtung nach einem der Ansprüche 14 bis 23, **dadurch gekennzeichnet, daß** sie Mittel (41) zur Dämpfung der Bearbeitungsschwingungen umfaßt.

25. Vorrichtung nach Anspruch 24, **dadurch gekennzeichnet, daß** die Dämpfungsmittel (41) an die Verschiebemittel (12) des Halteelements (13) angepaßt sind.

26. Vorrichtung nach einem der Ansprüche 14 bis 25, **dadurch gekennzeichnet, daß** das Halteelement (13) wenigstens eine Stützkugel (41) umfaßt, die dazu bestimmt ist, auf der Haltefläche (2_{M}) der Platte (2) während der Bearbeitung zu rollen.

27. Vorrichtung nach Anspruch 25, **dadurch gekennzeichnet, daß** die Stützkugel (41) aus einem elastisch verformbaren Material hergestellt ist, um die Bearbeitungsschwingungen zu dämpfen.

28. Vorrichtung nach einem der Ansprüche 14 bis 27, **dadurch gekennzeichnet, daß** die Stützmittel (5) der Platte (2) abnehmbar sind, und daß sie Mittel (6) zur Festlegung der Stützmittel (5) während der Bearbeitung der Platte umfaßt.

29. Vorrichtung nach Anspruch 28, **dadurch gekennzeichnet, daß** die Stützmittel einen abnehmbaren Rahmen (5) umfassen, der mit Mitteln zur Befestigung einer zu bearbeitenden Platte versehen ist.

30. Vorrichtung nach Anspruch 29, **dadurch gekennzeichnet, daß** der Rahmen wenigstens eine bewegliche Querstrebe umfaßt, die eine Anpassung der Abmessungen des Rahmens ermöglicht.
